# EUROPÄISCHE PATENTSCHRIFT

(11) **EP 1 587 293 B1**
(45) Veröffentlichungstag und Bekanntmachung des Hinweises auf die Patenterteilung: **22.10.2008**
(21) Anmeldenummer: 05008392.2
(22) Anmeldetag: 18.04.2005
(51) Int. Cl.: H04M 9/00

(54) **Drahtlose Türsprechanlage**
Wireless door telephone
Portier électronique sans fil

(30) Priorität: 18.04.2004 DE 102004020316
(43) Veröffentlichungstag der Anmeldung: 19.10.2005
(73) Patentinhaber: Ritto GmbH & Co.KG, 35708 Haiger (DE)
(72) Erfinder: Neumann, Udo, 58579 Schalksmühle (DE)
(74) Vertreter: Fleck, Hermann-Josef

(56) Entgegenhaltungen:
- DE-A1- 10 045 091
- DE-C1- 4 408 972
- DE-U1- 20 100 215
- PATENT ABSTRACTS OF JAPAN Bd. 2003, Nr. 11, 5. November 2003 (2003-11-05) & JP 2003 204398 A (MITSUBISHI ELECTRIC BUILDING TECHNO SERVICE CO LTD), 18. Juli 2003 (2003-07-18)

## Beschreibung

Die Erfindung betrifft eine Türsprechanlage mit einer Türstation, an der mindestens eine Klingeltaste angeordnet ist, einem Türöffner zum elektrischen Entriegeln einer Tür, einem Mikrokontroller mit integriertem Speicher, mindestens einem mit der Türstation verbundenem Wohntelefon und mindestens einem externen Mobiltelefon.

Heute sind Türsprechanlagen bekannt, welche über Telekommunikationsadapter an das Telefon-Festnetz angeschlossen werden können. Diese Telekommunikationsadapter bieten die Möglichkeit einer Rufweiterschaltung auf ein Telefon, dessen Telefonnummer als Zielempfangsnummer im Telekommunikationsadapter hinterlegt ist. Ein Klingelsignal an der Türsprechanlage kann somit zu einem beliebigen Telefon, auch durch Einwahl über das Festnetz in ein Mobilfunknetz zu einem Mobiltelefon, weitergeleitet werden. Über diese Verbindung kann dann eine Sprachverbindung zwischen der Türsprechanlage und dem Telefon aufgebaut werden. Dabei bietet insbesondere die Rufweiterschaltung auf ein Mobiltelefon die Möglichkeit, von etwaigen Besuchern sicher erreicht zu werden, auch wenn man sich nicht innerhalb der Wohnung oder des Gebäudes aufhält. Kombiniert mit einer kodierten Türöffnerfunktion kann auch die Tür von einem Mobiltelefon aus geöffnet und einem Besucher Einlass gewährt werden.

Die beschriebene Art des Verbindungsaufbaus zwischen der Türsprechanlage und einem Mobiltelefon zeigt einige Nachteile. Zunächst wird als zusätzliches Gerät ein Telekommunikationsadapter benötigt, der in die Elektroinstallation eingebaut werden muss. Zum Verbindungsaufbau wählt sich der Telekommunikationsadapter in das Festnetz ein und die Vermittlungsstelle des Festnetzproviders setzt dann das Signal auf das Mobilfunknetz um. Hierbei kommt es zu merkenswerten Verzögerungen bei dem Verbindungsaufbau zwischen der Türstation und dem als Empfänger vorgesehenen Mobiltelefon.

In der DE 201 00 215 U1 ist eine Türsprechanlage mit Türöffner und Sende-/Empfangsteil für ein mobiles Kommunikationssystem beschrieben, welches diese Nachteile durch einen direkten Verbindungsaufbau über das Mobilfunknetz umgeht. Dabei läutet beim Betätigen einer ersten Taste eine Türglocke und gleichzeitig wird über den Sende-/Empfangsteil ein Mobiltelefon mit einer bestimmten Rufnummer im mobilen Kommunikationssystem gerufen oder es wird beim Betätigen einer zweiten Taste ein vom Sende-/Empfangsteil ankommender Ruf entgegengenommen und es wird über das mobile Kommunikationssystem bei Rufannahme eine Gesprächsverbindung zwischen der Türsprechanlage und dem Mobiltelefon hergestellt und es wird bei aufrechter Gesprächsverbindung durch Drücken einer bestimmten Taste oder Eingabe eines Codes am Mobiltelefon der Türöffner betätigt und die aufrechte Gesprächsverbindung wird durch das Mobiltelefon beendet. Weiterhin bietet das System die Möglichkeit, ein Display in die Türsprechanlage zu integrieren, auf welchem vom Sende-/Empfangsteil empfangene Kurznachrichten ausgegeben werden können.

Nachteilig bei dieser Anordnung ist, dass die Türsprechanlage mit einem speziell zu entwickelnden, in der Schnittstelle auf die Türsprechanlage abgestimmten Sende-/Empfangsteil für ein mobiles Kommunikationssystem ausgestattet werden muss.

In der DE 10045091 A1 ist eine Vorrichtung zur fernbetätigten Türöffnung beschrieben.

Es ist Aufgabe der Erfindung, eine Türsprechanlage bereitzustellen, die eine einfache und schnelle Verbindung zu einer kostengünstigen Mobilfunkeinheit und darüber zu einem externen Mobilfunkteilnehmer ermöglicht.

Es ist weiterhin Aufgabe der Erfindung, hierzu ein Verfahren bereitzustellen.

Die Aufgabe wird dadurch gelöst, dass wenigstens eine der Einheiten der Türsprechanlage ein Bluetooth-Modul enthält und dass eine zugeordnete Mobilfurikeinheit mit einem integrierten Bluetooth-Modul verwendet ist.

Durch diese Ausführung der Erfindung ist es möglich, als Mobilfunkeinheit ein handelsübliches Mobilfunkmodul mit integriertem Bluetooth-Modul zu verwenden, wie es heute bereits in vielen Mobilfunktelefonen eingesetzt wird und somit als Großserienprodukt kostengünstig zu beziehen ist. Die Schnittstelle zwischen der Türsprechanlage und der zugeordneten Mobilfunkeinheit ist über einen Bluetooth-Standard definiert. Eine aufwendige Entwicklung eines an die Türsprechstation angepaßten Mobilfunkmoduls kann somit entfallen. Weiterhin ermöglicht es die Bluetooth-Verbindung, dass das Mobilfunkmodul an einem beliebigen Ort innerhalb der Reichweiter der Bluetooth-Verbindung angebracht werden kann und nicht in die Türsprechanlage integriert werden muss.

Dadurch, dass das Bluetooth-Modul der Türsprechanlage über ein Bluetooth-Modul des externen Mobiltelefons ansteuerbar ist kann eine direkte Verbindung zwischen einem externen Mobiltelefon und der Türsprechanlage ohne die Verbindung über ein kostenpflichtiges Mobilfunknetz erfolgen.

Ein kompakter Aufbau ergibt sich, wenn das Bluetooth-Modul in der Türstation integriert ist. Die zugehörige Mobilfunkeinheit mit integriertem Bluetooth-Modul kann jetzt in der Türstation integriert sein oder im Sendebereich des Bluetooth-Moduls der Türstation angeordnet werden. Bei Mehrparteien-Anlagen kann die zentrale Mobilfunkeinheit mit den verschiedenen Mobiltelefonen der Hausbewohner in Verbindung treten. Weiterhin ist es möglich, dass ein externes Mobiltelefon über seine Bluetooth-Schnittstelle mit der Türsprechanlage in Verbindung tritt, wenn es sich in der Umgebung der Türstation befindet.

Ist das Bluetooth-Modul im Wohntelefon integriert, kann die zugehörige Mobilfunkeinheit in dem Wohntelefon oder im Sendebereich des Bluetooth-Moduls des Wohntelefons, also vorzugsweise in der Wohnung und somit in einem für Fremde unzugänglichen Bereich angeordnet werden. Bei Mehrparteien-Anlagen können die verschiedenen Parteien über die Wahl des Wohntelefons individuell entscheiden, ob sie eine Anlage mit der Möglichkeit der Mobilfunkverbindung oder eine konventionelle Anlage bevorzugen. Weiterhin kann bei dieser Ausführungsform eine Bluetooth-Verbindung innerhalb der Wohnung zwischen dem Wohntelefon und dem externen Mobilfunktelefon hergestellt werden, soweit sich das externe Mobiltelefon innerhalb der Reichweite des Bluetooth-Moduls befindet.

Eine große Flexibilität im Aufbau der Türsprechanlage wird dadurch erreicht, dass das Bluetooth-Modul als separates Modul in der Türsprechanlage integriert ist. Bluetooth-Modul und die zugeordnete Mobilfunkeinheit können so an einem beliebigen Ort innerhalb der Installation der Türsprechanlage angeordnet sein.

In einer bevorzugten Ausführungsform sind in einem elektronischen Speicher der Türsprechanlage eine oder mehrere Telefonnummern hinterlegt, die Klingeltasten zugeordnet sind. Somit ist es möglich, bei Mehrpartelen-Anlagen den Klingeltasten jeweils einen bestimmten Mobilfunkteilnehmer zuzuordnen.

Eine schnellere Datenübertragung bei größerer Reichweite wird dadurch erreicht, dass für die interne Datenübertragung zu der zugeordneten Mobilfunkeinheit ein Funk-Modul nach dem Standard 802.11 vorgesehen ist.

Die das Verfahren betreffende Aufgabe der Erfindung wird dadurch gelöst, dass zwischen wenigstens einer der Einheiten der Türsprechanlage und einem ihr zugeordneten Bluetooth-Modul eine Datenverbindung zu einer zugeordneten Mobilfunkeinheit über ein in diese integriertes Bluetooth-Modul aufgebaut wird.

Dies ermöglicht einen standardisierten, störsicheren und abhörgeschützten Datenaustausch zwischen einer Einheit der Türsprechanlage und einer zugeordneten Mobilfunkeinheit unter Verwendung von in großen Stückzahlen und somit kostengünstig hergestellten Bauteilen.

In einer bevorzugten Ausgestaltung der Erfindung wird die Türsprechanlage über ein externes Mobiltelefon über das Mobilfunknetz programmiert. Die Programmierung der Türsprechanlage kann somit von einer berechtigten Person, zum Beispiel dem Wohnungseigentümer, der Wohnungsverwaltung oder dem Kundenservice des Anlagenherstellers von jedem beliebigen Ort, an dem eine Mobilnetzverbindung besteht, vorgenommen werden.

Ein schneller Verbindungsaufbau zwischen der Türstation und dem vorgesehenen Rufempfänger, also dem externen Mobiltelefon, ohne den zeitaufwändigen Umweg über ein Festnetz wird dadurch erreicht, dass zur Rufsignalisierung ein Signal von der Türstation über das Bluetooth-Modul an die Mobilfunkeinheit gesendet wird, dass die Mobilfunkeinheit eine Verbindung zum externen Mobiltelefon herstellt und dort ein Rufsignal bewirkt.

Dadurch, dass die Sprachübertragung zwischen der Türstation und dem externen Mobiltelefon über die interne Bluetooth-Verbindung zu der zugeordnete Mobilfunkeinheit und von dort über das Mobilfunknetz erfolgt, kann ein im Vergleich zu einer Festnetz-/ Mobilfunknetz-Verbindung kostengünstige Verbindung innerhalb eines Mobilnetzes hergestellt werden, wobei die interne Sprachübertragung über die Bluetooth-Verbindung nach einem standardisierten Protokoll erfolgt.

Dadurch, dass über eine Signalisierung vom externen Mobiltelefon aus der Türöffner bedient werden kann, kann zum Beispiel vom Wohnungseigentümer einer Person, welche sich über die Türsprechanlage mit ihm in Verbindung gesetzt hat, die Wohnungstür geöffnet werden, wenn sich der Wohnungseigentümer nicht der Nähe des Wohntelefons aufhält.

Eine einfache und gegen Mißbrauch gesicherte Art, den Türöffner zu bedienen, ergibt sich dadurch, dass die Signalisierung zur Bedienung des Türöffners über eine Tastenkombination am externen Mobiltelefon und/oder eine SMS mit dem Öffnungscode erfolgt.

In einer bevorzugten Ausführungsform der Erfindung ist vorgesehen, dass eine Steuerung der Türsprechanlage feststellt, ob zu dem externen Mobiltelefon eine Verbindung über Bluetooth aufgebaut werden kann, in diesem Fall keine Verbindung über das Mobilfunknetz aufgebaut wird und der Sprach- und Datenverkehr über das interne Bluetooth-Modul und das Bluetooth-Modul des externen Mobiltelefons erfolgt. Die Türsprechanlage verwendet somit nach Möglichkeit, also wenn sich der anzurufende Mobilfunkteilnehmer in Reichweite des Bluetooth-Moduls befindet, die gebührenfreie Bluetooth-Verbindung. Der über die Mobilfunk-Verbindung mögliche Funktionsumfang des Datentransfers ist dabei auch über die Bluetooth-Verbindung darstellbar. Insbesondere der Programmietvorgang kann somit kostenfrei abgewickelt werden.

Die Erfindung wird im folgenden anhand der in den Figuren dargestellten Ausführungsbeispiele näher erläutert. Es zeigen:
- Fig. 1: eine Türsprechanlage mit Mobilfunkeinheit
- Fig. 2: eine Türssprochanlage mit Datenübertragung mittels Bluetooth

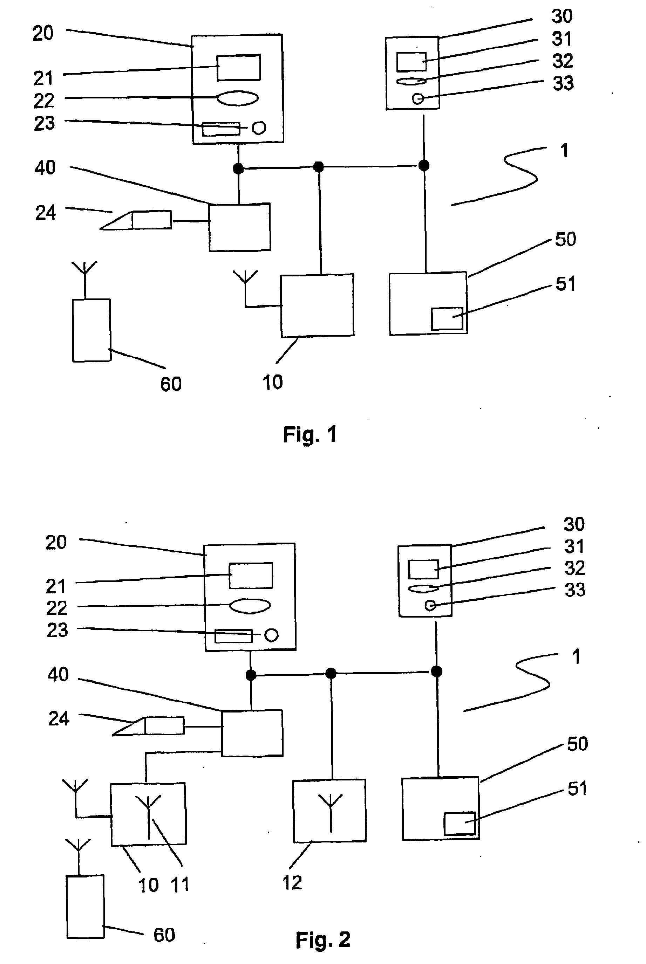

Die Fig. 1 zeigt eine Türsprechanlage 1 mit einer Mobilfunkeinheit 10 nach dem Stand der Technik. Die Türsprechanlage 1 besteht dabei aus einer Türstation 20, einem über ein Bussystem damit verbundenen Wohntelefon 30, einem gemeinsamen Netzteil 40, einem Mikrokontroller 50 und der Mobilfunkeinheit 10, die der Kommunikation mit einem externen Mobiltelefon 60 dient.

Die Türstation 20 weist einen Lautsprecher 21 und ein Mikrofon 22 auf, die der Kommunikation mit einem an der Aussenseite eines Wohngebäudes stehenden Besuchers dienen. Mittels einer Klingeltaste 23 kann der Besucher den Einlasswunsch signalisieren. In vielen Fällen sind mehrere Klingeltasten 23 vorhanden, deren Zugehörigkeit zu den einzelnen Wohnungen durch neben ihnen angebrachte Namensschilder kenntlich gemacht sind. Der Einlasswunsch sowie die Sprachkommunikation werden über das Bussystem dem Wohntelefon 30 zugeführt, welches zur Sprachkommunikation einen Lautsprecher 31 und ein Mikrofon 32 aufweist. Soll der Besucher eingelassen werden, kann mittels einer Taste 33 ein Signal einem Türöffner 24 zugeführt werden, der mit dem Netzteil 40 verbunden ist und der die Tür mechanisch entriegelt.

Falls sich keine Person in der Nähe des Wohntelefons 30 aufhält, kann der Eilasswunsch beantwortet werden, indem die Signalisierung über die Mobilfunkeinheit 10 an das Mobiltelefon 60 erfolgt. Hierdurch kann der Wohnungsinhaber über das Mobiltelefon 60 erreicht werden und es kann sowohl eine Sprachkommunikation stattfinden als auch mittels des Tastenfeldes des Moblitelefons 60 die Tür mit dem Türöffner 24 entriegelt werden. Aus Gründen der Sicherheit gegen unbefugten Eintritt wird die Öffnung der Tür nur bei Eingabe eines Zutrittscodes gestattet. Die Steuerung der Kommunikation und insbesondere der Freigabe der Öffnung der Tür wird über den Mikrokontroller 50 abgewickelt, der mit einem Speicher 51 verbunden ist, der die Zugangscodes enthält. Weiterhin enthält der Speicher Informationen über die zu kontaktierenden Mobilfunknummern, die bei mehreren durch die Türsprechanlage 1 zu bedienenden Wohnungen unterschiedlich sein können.

Fig. 2 zeigt eine Türsprechanlage 1, bei der die Datenübertragung vom Mikrokontroller 50 zunächst an ein Bluetooth-Modul 12 erfolgt. Von diesem aus werden die Daten auf dem Funkweg innerhalb der Türsprechanlage 1 an ein Bluetooth-Modul 11 der Mobilfunkeinheit 10 und von dort über das Mobilfunknetz an das Mobiltelefon 60 weitergegeben. Auf dem umgekehrten Wege werden Sprach- und Signal-Daten vom Mobilfunktelefon 60 an das Mobilfunkteil 10 gesendet und dann innerhalb der Türsprechanlage 1 per Bluetooth zum Bluetooth-Modul 12 weitergegeben. Die Mobilfunkeinheit 10 muss dabei lediglich mit dem Netzgerät 40 verbunden sein, nicht aber mit dem Datenbus. Die Stromversorgung der Mobilfunkeinheit 10 kann aber über den mit der Türstation 20 und dem Wohntelefon 30 gemeinsamen Bus erfolgen. Die Mobilfunkeinheit 10 und das Bluetooth-Modul 12 können in einer separaten Baueinheit innerhalb der Türsprechanlage 1 angeordnet sein oder in der Türstation 20 oder dem Wohntelefon 20 integriert sein.

Durch diese Anordnung kann sowohl ein leicht erhältliches Bluetooth-Modul 12 zum Anschluss an Mikrokontroller 50 verwendet werden, als auch eine Mobilfunkeinheit 10 mit Bluetooth-Modul 11, wie sie als Standard-Bauteil erhältlich ist. Es wird die Modifikation einer Mobilfunkeinheit 10 zum direkten Anschluss an eine Mikrokontroller vermieden, die erheblichen Aufwand hinsichtlich Hardware als auch Software bedingen würde.

Auch bei der erfindungsgemäßen Türsprechanlage erfolgt die Steuerung der Kommunikation und die Freigabe der Öffnung der Tür über einen Mikrokontroller 50 und einen Speicher 51, in dem die Zugangscodes und die zu kontaktierenden Mobilfunknummern hinterlegt sind. Dabei kann der Zutrittscode zur Öffnung der Tür über eine Tastenkombination am Mobiltelefon 60 oder durch eine gegebenenfalls vorher formulierten und im Mobiltelefon 60 gespeicherten SMS-Botschaft an die Mobilfunkeinheit 10 und somit an die Türsprechanlage 1 gesendet werden.

Die Ablage der Information im Speicher 51 kann mittels des Mobiltelefons 60 und die Mobilfunkeinheit 10 über das Mobilfunknetz erfolgen.

Befindet sich das Mobiltelefon 60 innerhalb der Reichweite des Bluetooth-Moduls 12 der Türsprechanlage 1 und verfügt das Mobiltelefon 60 ebenfalls über ein Bluetooth-Modul, so kann die Verbindung zwischen Mobiltelefon 60 und Türsprechanlage 1 auch direkt über eine Bluetooth-Verbindung erfolgen.

## Patentansprüche

1. Türsprechanlage (1) mit einer Türstation (20), an der mindestens eine Klingeltaste (23) angeordnet ist, einem Türöffner (24) zum elektrischen Entriegeln einer Tür, einem Mikrokontroller (50) mit integriertem Speicher (51), mindestens einem mit der Türstation (20) verbundenem Wohntelefon (30) und mindestens einem externen Mobiltelefon (60), wobei wenigstens eine der Einheiten der Türsprechanlage (1) ein Bluetooth-Modul (12) enthält, wobei eine zugeordnete Mobilfunkeinheit (10) in Form eines Mobilfunkmoduls mit einem integrierten Bluetooth-Modul (11) verwendet ist, wobei eine bidirektionale Datenübertragung zwischen der Türsprechanlage (1) und dem externen Mobiltelefon (60) über eine Bluetooth-Verbindung zwischen dem Bluetooth-Modul (12) zu dem Bluetooth-Modul (11) der Mobilfunkeinheit (10) und über eine Mobilfunkverbindung in einem Mobilfunknetz zwischen der Mobilfunkeinheit (10) und dem externen Mobiltelefon (60) durchführbar ist, und wobei das Bluetooth-Modul (12) im Wohntelefon (30) integriert ist.

2. Türsprechanlage (1) nach Anspruch 1,
**dadurch gekennzeichnet,**
**dass** das Bluetooth-Modul (12) der Türsprechanlage über ein Bluetooth-Modul des externen Mobiltelefons (60) ansteuerbar ist.

3. Türsprechanlage (1) nach einem der Ansprüche 1 oder 2,
**dadurch gekennzeichnet,**
**dass** in einem elektronischen Speicher (51) der Türsprechanlage (1) eine oder mehrere Telefonnummern hinterlegt sind, die Klingeltasten (23) zugeordnet sind.

4. Türsprechanlage (1) nach einem der Ansprüche 1 bis 3,
**dadurch gekennzeichnet,**
**dass** für die interne Datenübertragung zu der zugeordneten Mobilfunkeinheit (10) ein Funk-Modul nach dem Standard 802.11 vorgesehen ist.

5. Verfahren zum Betrieb einer Türsprechanlage (1) mit mindestens einer Türstation (20), einem Netzteil (40), einem Mikrokontroller (50), mindestens einem Wohntelefon (20) und mindestens einem externen Mobiltelefon (60), wobei zwischen wenigstens einer der Einheiten der Türsprechanlage (1) und einem ihr zugeordneten Bluetooth-Modul (12) eine Datenverbindung zu einer zugeordneten Mobilfunkeinheit (10) in Form eines Mobilfunkmoduls über ein in dieses integriertes Bluetooth-Modul (11) aufgebaut wird, wobei eine Steuerung der Türsprechanlage (1) feststellt, ob zu dem externen Mobiltelefon (60) eine Verbindung über Bluetooth aufgebaut werden kann, in diesem Fall keine Verbindung über das Mobilfunknetz aufgebaut wird und der Sprach- und Datenverkehr über das interne Bluetooth-Modul (12) und das Bluetooth-Modul des externen Mobiltelefons erfolgt.

6. Verfahren nach Anspruch 5,
**dadurch gekennzeichnet,**
**dass** die Türsprechanlage (1) über ein externes Mobiltelefon (60) über das Mobilfunknetz programmiert wird.

7. Verfahren nach einem der Ansprüche 5 oder 6,
**dadurch gekennzeichnet,**
**dass** zur Rufsignalisierung ein Signal von der Türstation (20) über das Bluetooth-Modul (12) an die Mobilfunkeinheit (10) gesendet wird, dass die Mobilfunkeinheit (10) eine Verbindung zum externen Mobiltelefon (60) herstellt und dort ein Rufsignal bewirkt.

8. Verfahren nach einem der Ansprüche 5 bis 7,
**dadurch gekennzeichnet,**
**dass** die Sprachübertragung zwischen der Türstation (20) und dem externen Mobiltelefon (60) über die interne Bluotooth-Verbindung zu der zugeordneten Mobilfunkeinheit (10) und von dort über das Mobilfunknetz erfolgt.

9. Verfahren nach einem der Ansprüche 5 bis 8,
**dadurch gekennzeichnet,**
**dass** über eine Signalisierung vom externen Mobiltelefon (60) aus der Türöffnern (24) bedient werden kann.

10. Verfahren nach einem der Ansprüche 5 bis 9,
**dadurch gekennzeichnet,**
**dass** die Signalisierung zur Bedienung des Türöffners (24) über eine Tastenkombination am externen Mobiltelefon und/oder eine SMS mit dem Öffnungscode erfolgt.

## Claims

1. Door intercom system (1) with a door station (20) on which at least one bell button (23) is arranged, a door opener (24) for electrically unlocking a door, a microcontroller (50) with an integrated memory (51), at least one home telephone (30) which is connected to the door station (20) and at least one external mobile telephone (60), with at least one of the units of the door intercom system (1) containing a Bluetooth module (12), with an associated mobile radio unit (10) in the form of a mobile radio module with an integrated Bluetooth module (11) being used, it being possible for bidirectional data transmission to be carried out between the door intercom system (1) and the external mobile telephone (60) via a Bluetooth connection between the Bluetooth module (12) and the Bluetooth module (11) of the mobile radio unit (10) and via a mobile radio connection in a mobile radio network between the mobile radio unit (10) and the external mobile telephone (60), and with the Bluetooth module (12) being integrated in the home telephone (30).

2. Door intercom system (1) according to Claim 1,
**characterized**
**in that** the Bluetooth module (12) of the door intercom system can be actuated via a Bluetooth module of the external mobile telephone (60).

3. Door intercom system (1) according to either of Claims 1 and 2,
**characterized**
**in that** one or more telephone numbers which are associated with bell buttons (23) are stored in an electronic memory (51) of the door intercom system (1).

4. Door intercom system (1) according to one of Claims 1 to 3,
**characterized**
**in that** a radio module in accordance with Standard 802.11 is provided for the internal data transmission to the associated mobile radio unit (10).

5. Method for operating a door intercom system (1) having at least one door station (20), a mains part (40), a microcontroller (50), at least one home telephone (20) and at least one external mobile telephone (60), with a data connection to an associated mobile radio unit (10) in the form of a mobile radio module being established between at least one of the units of the door intercom system (1) and an associated Bluetooth module (12) via a Bluetooth module (11) which is integrated in the said mobile radio module, with a controller of the door intercom system (1) determining whether a connection can be established to the external mobile telephone (60) via Bluetooth, in this case no connection being established via the mobile radio network and the voice and data communication being performed via the internal Bluetooth module (12) and the Bluetooth module of the external mobile telephone.

6. Method according to Claim 5,
**characterized**
**in that** the door intercom system (1) is programmed by means of an external mobile telephone (60) via the mobile radio network.

7. Method according to one of Claims 5 and 6,
**characterized**
**in that,** in order to signal a call, a signal is transmitted from the door station (20) to the mobile radio unit (10) via the Bluetooth module (12), in that the mobile radio unit (10) establishes a connection to the external mobile telephone (60), and there produces a call signal.

8. Method according to one of Claims 5 to 7,
**characterized**
**in that** voice transmission between the door station (20) and the external mobile telephone (60) is performed via the internal Bluetooth connection to the associated mobile radio unit (10) and from there via the mobile radio network.

9. Method according to one of Claims 5 to 8,
**characterized**
**in that** the door opener (24) can be operated by means of signalling from the external mobile telephone (60).

10. Method according to one of Claims 5 to 9,
**characterized**
**in that** the signalling for operating the door opener (24) is performed via a key combination on the external mobile telephone and/or an SMS with the opening code.

## Revendications

1. Interphone de porte (1) comprenant une station de porte (20) sur laquelle est disposé au moins un bouton de sonnette (23), un portier électrique (24) pour le déverrouillage électrique d'une porte, un microcontrôleur (50) avec mémoire intégrée (51), au moins un téléphone domestique (30) relié avec la station de porte (20) et au moins un téléphone mobile externe (60), au moins l'une des unités de l'interphone de porte (1) comprenant un module Bluetooth (12), une unité de radiocommunication mobile (10) associée sous la forme d'un module de radiocommunication mobile avec module Bluetooth (11) intégré étant utilisée, une transmission de données bidirectionnelle pouvant être établie entre l'interphone de porte (1) et le téléphone mobile externe (60) par le biais d'une liaison Bluetooth entre le module Bluetooth (12) et le module Bluetooth (11) de l'unité de radiocommunication mobile (10) et par le biais d'une liaison de radiocommunication mobile dans un réseau de radiocommunication mobile entre l'unité de radiocommunication mobile (10) et le téléphone mobile externe (60), et le module Bluetooth (12) étant intégré dans le téléphone domestique (30).

2. Interphone de porte (1) selon la revendication 1, **caractérisé en ce que** le module Bluetooth (12) de l'interphone de porte peut être commandé par le biais d'un module Bluetooth du téléphone mobile externe (60).

3. Interphone de porte (1) selon l'une des revendications 1 ou 2, **caractérisé en ce que** dans une mémoire électronique (51) de l'interphone de porte (1) sont enregistrés un ou plusieurs numéros de téléphone qui sont affectés aux boutons de sonnette (23)

4. Interphone de porte (1) selon l'une des revendications 1 à 3, **caractérisé en ce qu'**un module radioélectrique selon la norme 802.11 est prévu pour la transmission de données interne vers l'unité de radiocommunication mobile (10) associée.

5. Procédé d'utilisation d'un interphone de porte (1) comprenant au moins une station de porte (20), un adaptateur secteur (40), un microcontrôleur (50), au moins un téléphone domestique (30) et au moins un téléphone mobile externe (60), une liaison de données entre au moins l'une des unités de l'interphone de porte (1) et un module Bluetooth (12) qui lui est associé étant établie une unité de radiocommunication mobile (10) associée sous la forme d'un module de radiocommunication mobile par le biais d'un module Bluetooth (11) intégré dans celui-ci, une commande de l'interphone de porte (1) déterminant si une liaison par Bluetooth peut être établie avec le téléphone mobile externe (60), auquel cas aucune liaison n'est établie par le biais du réseau de radiocommunication mobile et le trafic de parole et de données s'effectue par le biais du module Bluetooth interne (12) et du module Bluetooth du téléphone mobile externe.

6. Procédé selon la revendication 5, **caractérisé en ce que** l'interphone de porte (1) est programmé par le biais d'un téléphone mobile externe (60) par le biais du réseau de radiocommunication mobile.

7. Procédé selon l'une des revendications 5 ou 6, **caractérisé en ce que** pour la signalisation d'appel, un signal est émis de la station de porte (20) à l'unité de radiocommunication mobile (10) par le biais du module Bluetooth (12), que l'unité de radiocommunication mobile (10) établit une liaison avec le téléphone mobile externe (60) et y produit un signal d'appel.

8. Procédé selon l'une des revendications 5 à 7, **caractérisé en ce que** la transmission de parole entre la station de porte (20) et le téléphone mobile externe (60) s'effectue par le biais de la liaison Bluetooth interne avec l'unité de radiocommunication mobile (10) associée et de là par le biais du réseau de radiocommunication mobile.

9. Procédé selon l'une des revendications 5 à 8, **caractérisé en ce que** le portier électrique (24) peut être commandé par une signalisation depuis le téléphone mobile externe (60).

10. Procédé selon l'une des revendications 5 à 9, **caractérisé en ce que** la signalisation destinée à commander le portier électrique (24) s'effectue par une combinaison de touches sur le téléphone mobile externe et/ou un SMS contenant le code d'ouverture.
